# DEMANDE DE BREVET EUROPEEN

(11) **EP 4 825 158 A1**
(43) Date de publication de la demande: **21.10.2026**
(21) Numéro de dépôt: 25305572.7
(22) Date de dépôt: 18.04.2025
(51) Int. Cl.: A01G 9/02, F16P 7/00, A62B 5/00

(54) **DISPOSITIF DE VEGETALISATION ABATTABLE**

(71) Demandeur: Javoy-Plantes Pepinieres, 45590 Saint-Cyr-en-Val (FR)
(72) Inventeur: JAVOY, Pierre, 45590 SAINT-CYR-EN-VAL (FR); JAVOY, Benoît, 45590 SAINT-CYR-EN-VAL (FR); RAULINE, Marie-Laure, 45590 SAINT-CYR-EN-VAL (FR)
(74) Mandataire: Icosa

(57) **Abrégé**

La présente invention concerne un dispositif de végétalisation comprenant un moyen de couplage avec un fusible permettant d'abattre la végétalisation en cas d'urgence.

## Description

### DOMAINE DE L'INVENTION

La présente invention concerne la végétalisation des bâtiments, et en particulier la végétalisation par des plantes, en particulier grimpantes, fixées de manière abattable.

### ÉTAT DE LA TECHNIQUE

Dans le contexte écologique actuel, la végétalisation de l'espace urbain devient un véritable enjeu climatique. En particulier, la végétalisation des façades d'immeubles est de plus en plus recommandée, que ce soit pour des raisons climatiques, de support à la biodiversité ou pour éviter des dégradations - graffiti par exemple. Actuellement, la pose d'un grillage ou palissage sur la façade à végétaliser reste la technique privilégiée lorsque les végétaux ne peuvent pas se fixer seul par leur système de crampons, vrilles, ventouse ou racines aériennes.

Cette technique présente plusieurs inconvénients : les plantes sont fixées de manière permanente à la façade, culminant parfois à plusieurs dizaines de mètre du sol,. Ces plantes présentent un risque lorsque le bâtiment subit des événements exceptionnels et potentiellement dangereux comme les incendies. En effet, la présence de végétaux sur le bâtiment peut aggraver de tels événements, notamment les incendies.

Il existe donc un besoin pour l'amélioration de la sécurité des dispositifs fixant des plantes sur une façade de bâtiment.

La présente invention a donc pour objet de permettre la sécurisation de tels dispositifs par l'installation d'éléments « fusibles » apte à abattre, c'est-à-dire à détacher très rapidement, lesdits dispositifs du bâtiment. Ainsi, les plantes peuvent être facilement retirées du bâtiment en cas d'urgence, ce qui limite très fortement - voire annule - les risques d'aggravation d'événements exceptionnels tels que les incendies.

### RÉSUMÉ

Le présent exposé concerne un dispositif de végétalisation d'un bâtiment comprenant :
- un moyen d'ancrage destiné à être fixé sur le bâtiment ;
- un support comprenant à une première extrémité, un premier moyen de fixation destiné à être fixé au moyen d'ancrage; et
- un moyen de couplage destiné à coupler le support au bâtiment ;
dans lequel le moyen de couplage comprend un fusible permettant de rompre le couplage entre le support et le bâtiment.

Dans certaines configurations, le fusible comprend une goupille à rupture ou à crochet, une goupille magnétique ou une goupille à verrou.

Dans certaines configurations, le dispositif comprend plusieurs moyens de couplage destinés à coupler le support au bâtiment, et chaque moyen de couplage comprend un fusible et caractérisé en ce que tous les fusibles sont reliés à un unique moyen d'activation permettant de rompre conjointement tous les couplages entre le support et le bâtiment.

Dans certaines configurations, le support est un support linéaire choisi parmi un câble, une chaîne, une corde, un filet ou un fil.

Dans certaines configurations, le moyen d'ancrage est solidaire d'un bac de culture destiné à recevoir la plante grimpante.

Dans certaines configurations, le support est un support amovible, et comprenant en outre un système de mise sous tension comprenant
- une configuration bloquée dans laquelle le système de mise sous tension maintient le support amovible en tension; et
- une configuration coulissante dans laquelle le système de mise sous tension laisse coulisser librement le support amovible ;
- le système de mise sous tension étant apte à changer de configuration sous l'action d'un jardinier,
dans lequel
- le support amovible est un support linéaire autour duquel une plante grimpante peut s'enrouler partiellement ; ou
- le support amovible comprend un palissage sur lequel une plante grimpante peut s'enrouler partiellement.

Dans certaines configurations, le système de mise sous tension comprend un système d'enroulement, de préférence choisis parmi les enrouleurs ou les treuils.

Dans certaines configurations, le dispositif comprend en outre un moyen de renvoi destiné à être fixé sur le bâtiment et dans lequel le support amovible est replié et peut coulisser librement, ledit moyen de renvoi comprenant un fusible permettant de rompre le couplage entre le moyen de renvoi et le bâtiment.

Dans certaines configurations, le moyen de renvoi est choisi parmi une poulie, un anneau, une barre, un axe ou une glissière.

Dans certaines configurations, le support amovible est constitué d'un support principal et de branches, la première extrémité du support amovible étant une première extrémité du support principal, un ensemble de systèmes de mise sous tension étant configuré pour :
- maintenir le support principal et les branches en tension dans une configuration bloquée ; ou
- laisser coulisser librement le support principal et les branches dans une configuration coulissante.

Dans certaines configurations, plusieurs supports amovibles sont fixés à un moyen d'ancrage ; et un système de mise sous tension est configuré pour :
- maintenir tous les supports amovibles en tension dans une configuration bloquée ; ou
- laisser coulisser librement tous les supports amovibles dans une configuration coulissante.

Dans certaines configurations, le système de mise sous tension est commandé à distance, de préférence au moyen d'un dispositif de commande placé à proximité du moyen d'ancrage.

Le présent exposé concerne par ailleurs un kit d'assemblage d'un dispositif selon l'un des précédents aspects, le kit comprenant une pluralité d'éléments à assembler entre eux incluant :
- au moins un moyen d'ancrage destiné à être fixé sur un bâtiment ;
- au moins un support comprenant à une première extrémité, un premier moyen de fixation destiné à être fixé au moyen d'ancrage;
- au moins un moyen de couplage destiné à coupler le support au bâtiment :
   dans lequel le moyen de couplage comprend un fusible permettant de rompre le couplage entre le support et le bâtiment.

Dans certaines configurations, le kit comprend une pluralité d'éléments à assembler entre eux incluant :
- au moins un moyen d'ancrage destiné à être fixé sur un bâtiment ;
- au moins un support amovible comprenant à une première extrémité, un premier moyen de fixation destiné à être fixé au moyen d'ancrage ;
- au moins un système de mise sous tension comprenant :
   - une configuration bloquée dans laquelle le système de mise sous tension maintient le support amovible en tension; et
   - une configuration coulissante dans laquelle le système de mise sous tension laisse coulisser librement le support amovible ;
   le système de mise sous tension étant apte à changer de configuration sous l'action d'un jardinier ;
et caractérisé en ce que
- le support amovible est un support linéaire autour duquel une plante grimpante peut s'enrouler partiellement ; ou
- le support amovible comprend un palissage sur lequel une plante grimpante peut s'enrouler partiellement.

Le présent exposé concerne par ailleurs une méthode d'installation d'un dispositif de végétalisation, de préférence amovible, d'un bâtiment comprenant les étapes suivantes :
- la fixation d'un moyen d'ancrage sur le bâtiment ;
- la fixation d'un moyen de couplage comprenant un fusible sur le bâtiment, le moyen de couplage étant placé plus haut selon la direction de la gravité que le moyen d'ancrage,
- la fixation au moyen d'ancrage d'un support, de préférence un support amovible, par sa première extrémité ;
- le couplage du support, de préférence un support amovible, au bâtiment par le moyen de couplage ;
dans lequel
- le support, de préférence un support amovible, est un support linéaire autour duquel une plante grimpante peut s'enrouler partiellement ; ou
- le support, de préférence un support amovible, comprend un palissage sur lequel une plante grimpante peut s'enrouler partiellement.

### DÉFINITIONS

Dans la présente invention, les termes ci-dessous sont définis de la manière suivante.

« **Bac de culture** » concerne un contenant (pot, jardinière, bac) destiné à recevoir une plante. Par extension, le bac de culture peut être aussi une plantation hors sol, une fosse de plantation, voire une plantation en pleine terre. Dans ce cas, un moyen d'ancrage solidaire du bac de culture peut être un pieu, une plaque enterrée, un bloc pesant disposé dans la terre.

« **Bâtiment** » concerne tout type d'immeuble et leurs éléments : mur intérieur, mur extérieur, façade, ou toit ; ayant une orientation verticale, horizontale ou toute autre orientation souhaitée. Par extension, le bâtiment peut être un ensemble de plusieurs immeubles, la végétalisation étant appuyée sur plusieurs immeubles en même temps. C'est le cas d'un végétalisation enjambant une cour ou une rue par exemple, ou à l'angle entre plusieurs immeubles. Les bâtiments incluent les bâtiments à destination d'habitation - maisons individuelle, immeubles collectifs, garages - , de travail ou de services - ateliers, usines, centres logistiques, immeuble de bureaux, musées, parkings - , commerciaux ainsi que des ouvrages d'art - ponts, murs anti-bruit, trémie, canaux, antennes...

« **Enrouler** » désigne la manière avec laquelle une plante grimpante s'élève sur son support. Ici, le terme enrouler recouvre un appui - une feuille prenant appui sur le palissage par exemple - ou un accrochage - par un organe d'accroche de la plante ou par un organe d'accroche artificiel - ou un enroulement - vrille par exemple.

« **Façade** » concerne la partie du bâtiment destinée à être végétalisée.

« **Palissage** » concerne un support sur lequel une plante grimpante ou tombante peut se fixer - par exemple en s'enroulant - lors de sa croissance. Un palissage peut avoir toute forme adaptée à la croissance d'une plante. Le palissage peut être un treillis, un maillage, un réseau de fils de toute structure. Le palissage peut aussi supporter le pied d'une plante, dans un pot. Par ailleurs, la forme globale de la surface du palissage n'est pas forcément limitée. Elle peut, par exemple, être plane ou tubulaire.

« **Plante grimpante** » concerne une plante dont les tiges nécessitent un support pour s'élever. Ces plantes ne peuvent pas grimper en l'absence de support. Certaines plantes développent des organes permettant un accrochage direct sur le support - crampons, ventouses, vrilles, racines aériennes. D'autres plantes s'enroulent autour du support : Pour les plantes non volubiles, il est nécessaire de lier les plantes au support. Pour les plantes volubiles, la structure elle-même de la plante s'enroule autour du support - par des tiges, des feuilles ou des vrilles - sans y être accrochée directement. En l'absence de support, une plante grimpante sera rampante - si son pied est au sol - ou tombante - si son pied est en hauteur.

### DESCRIPTION DÉTAILLÉE

La présente divulgation concerne un dispositif de végétalisation d'un bâtiment. Ce dispositif vise à placer des plantes à proximité des façades d'un bâtiment tout en permettant de les abattre rapidement.

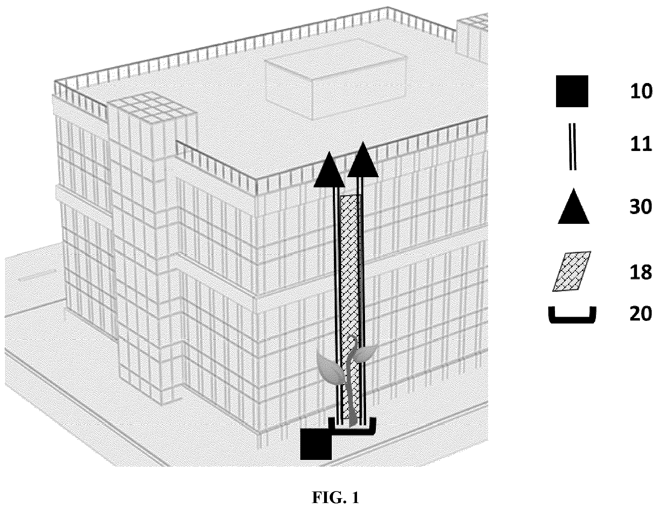

La figure 1 représente un dispositif de végétalisation d'un bâtiment selon un mode de réalisation de la présente invention.

Le dispositif de végétalisation comprend un moyen d'ancrage 10 destiné à être fixé sur le bâtiment. Ce moyen d'ancrage assure un positionnement fixe et stable du dispositif. Le moyen d'ancrage 10 peut être un point d'ancrage tel qu'une cheville, un anneau, un crochet, un fil porteur, une barre d'accroche, un bloc massif - dé de béton, rocher... Ce moyen d'ancrage peut être avantageusement solidaire d'un bac de culture 20 destiné à recevoir la plante.

Le dispositif de végétalisation comprend aussi un support 11. Ce support 11 comprend à sa première extrémité un premier moyen de fixation destiné à être fixé au moyen d'ancrage. Sa première extrémité est donc fixée par rapport au bâtiment, à proximité de l'endroit où le pied de la plante sera installé.

Le support 11 peut être souple. Dans le présent exposé, un objet souple est un objet cohésif qui est apte à se déformer élastiquement de sorte que deux parties distinctes de cet objet puissent être mises en contact, étant entendu que cette déformation est réversible. Par exemple, selon le présent exposé, une corde est souple, une chaîne métallique est souple, un câble métallique de petite section est souple, mais une poutre en acier n'est pas souple.

De manière générale, lorsqu'un objet souple est étendu selon sa plus grande dimension, il a tendance à s'effondrer de façon réversible sous son propre poids, sous l'action de la gravité.

Par ailleurs, le dispositif de végétalisation comprend au moins un moyen de couplage 30 fixé sur le bâtiment. Le moyen de couplage 30 est placé plus haut que le moyen d'ancrage 10 selon la direction de la gravité ou direction verticale. Le moyen de couplage 30 est configuré pour attacher le support 11 au bâtiment et permettre l'extension verticale du support 11 le long de la direction verticale.

La végétalisation est rendue possible par la fonction de support à la croissance des plantes du support 11. Deux modes de réalisation sont possibles. Soit le support 11 est un support linéaire autour duquel une plante peut s'enrouler partiellement, spontanément pour une plante volubile, à l'aide d'organes d'accroche pour une plante non volubile. Par partiellement, on entend ici que la plante s'enroulera au plus sur la partie du support 11 qui se trouve entre le moyen d'ancrage 10 et le moyen de couplage 30. Soit le support 11 comprend un palissage 18 sur lequel une plante grimpante peut s'enrouler partiellement. De préférence, le palissage 18 s'étend au plus entre le moyen d'ancrage 10 et le moyen de couplage 30. De la même manière, on entend ici par partiellement que la plante s'enroulera sur tout ou partie du palissage 18. La plante peut s'enrouler au support 11 par enroulement naturel, ou par l'intermédiaire d'un organe d'accrochage - cordelette, élastique, anneau. Un organe d'accrochage est configuré pour pouvoir insérer au moins une branche de plante - de préférence sarmenteuse - entre l'organe d'accrochage et le support 11 afin d'emprisonner la branche entre l'organe d'accrochage et le support 11. Chaque organe d'accrochage a par exemple une forme générale de crochet ou de boucle.

En outre, la végétalisation d'un bâtiment utilisant le dispositif divulgué permet de limiter le nombre de trous à percer dans le bâtiment, en comparaison aux supports actuels de type palissage ou grillage qui nécessitent un grand nombre de points d'ancrage ou de moyen de couplage sur le mur.

Dans un mode de réalisation particulièrement adapté à la végétalisation par des plantes grimpantes qui s'accrochent directement à leur support, les supports 11 sont installés de manière à éviter le contact des plantes grimpantes avec la façade du bâtiment, ou tout élément du bâtiment sur lequel la plante pourrait s'accrocher et potentiellement détériorer, comme par exemple une gouttière. Une distance de 50 cm, voire 1 m, entre la façade et les supports est adaptée.

Les dimensions du dispositif de végétalisation, lorsqu'il est mis en place, dépendent essentiellement du bâtiment à végétaliser et des plantes employées.

Pour la végétalisation avec une glycine (*Wisteria*), la hauteur de végétalisation pourra atteindre 30 m. Dans ce cas, le support 11 a une longueur comprise entre 3 m et 60 m et sera constituée d'un câble en acier inoxydable de diamètre 5 mm.

Pour la végétalisation avec une ipomée (*Ipomoea*), la hauteur de végétalisation pourra atteindre 15 m. Dans ce cas, le support 11 a une longueur comprise entre 3 m et 30 m et sera par exemple constituée d'un câble en acier inoxydable de diamètre 3 mm.

Il faut noter que le support 11 peut être constitué de plusieurs sections reliées entre elles, par un crochet, un mousqueton ou tout autre moyen de liaison. En effet, la plante grimpante qui doit être mise en place sur le dispositif de végétalisation est en général préparée en pépinière, avec son support. Ce support n'a pas besoin d'être très long dans les phases initiales de croissance de la plante. Par exemple, on pourra initier la croissance d'une glycine (*Wisteria*) sur un câble de 4 m de hauteur. Ensuite, lorsque la plante grimpante est mise en place, la première section de câble de 4 m sera complétée par une seconde section de longueur adaptée selon la hauteur du bâtiment à végétaliser, conduisant au support 11 souhaité.

Lorsque le support 11 est un support linéaire, il peut être choisi parmi les câbles, chaînes, cordes ou fils - tressés ou non. La section du support linéaire peut être ronde, carrée, rectangulaire ou triangulaire. Le support linéaire peut aussi être une bande, de préférence trouée. Une bande textile présentant naturellement des mailles est particulièrement adaptée. Enfin, le support linéaire peut présenter des aspérités de surface - bosses, creux, pointes, entailles. Le choix du support linéaire sera un compromis entre la résistance (au vent, à l'accrochage), le poids, la résistance à la tension, la dilatation linéaire et l'adaptation à la croissance de la plante. Le choix du support 11 peut également être fonction de son mode de fixation.

Pour la végétalisation de très grandes façades, plusieurs dispositifs de végétalisation tels que décrit ci-dessus peuvent coopérer.

Dans un mode de réalisation chacun des dispositifs de végétalisation comprend de 2 à 20 supports 11, chacun de ces dispositifs étant opérables séparément.

Dans un autre mode de réalisation, un nombre plus important encore de supports 11 - de trente à cent - peut être mise en œuvre.

Le moyen de couplage 30 comprend un fusible. Le fusible est un élément sacrificiel qui présente une configuration intègre et une configuration ouverte. Lorsque le fusible est dans la configuration intègre, le moyen de couplage 30 maintient le support 11 accroché au bâtiment. Lorsque le fusible est dans la configuration ouverte, le moyen de couplage 30 laisse libre le support 11. En d'autres termes, lorsque le fusible est dans la configuration ouverte, le support 11 peut tomber sous l'action de la gravité. Autrement, le support 11 est fixé au bâtiment.

Par ailleurs, lorsque le dispositif de végétalisation comprend une pluralité de moyen de couplage 30, chaque moyen de couplage 30 comprend un fusible.

Le fusible peut passer de la configuration intègre à la configuration ouverte de façon automatique et/ou de façon commandée.

Lorsque le changement de configuration est automatique, le dispositif de végétalisation peut comprendre au moins un capteur apte à mesurer des informations et un contrôleur auquel le capteur est couplé. Le contrôleur est aussi connecté au fusible et apte à contrôler ce dernier. Le contrôleur est apte, en fonction des informations mesurées par le capteur, à reconnaitre une condition de rupture du fusible pré-enregistrée. Lorsque cette condition est atteinte, le contrôleur déclenche la rupture du fusible et le fusible passe dans la configuration ouverte.

Le capteur peut typiquement être un capteur de fumée. Ce capteur de fumée peut être couplé à un capteur de température. Selon cet exemple, le contrôleur peut être apte à reconnaitre un incendie et commander l'ouverture du fusible lorsqu'un incendie est détecté.

Lorsque le changement de configuration est manuel, le dispositif de végétalisation peut comprendre un activateur connecté au fusible. L'activation de l'activateur permet le changement de configuration du fusible depuis la configuration intègre vers la configuration ouverte. Cet activateur peut être activé par un opérateur extérieur.

Le fusible peut comprendre à la fois un changement de configuration automatique et un changement de configuration manuel, chacun permettant de rompre le couplage indépendamment de l'autre.

Le fusible peut comprendre une portion sacrificielle apte à se détruire sous certaines conditions. Dans ce cas, le changement de configuration peut être automatique sans être piloté par un contrôleur. Par exemple, le fusible peut comprendre un câble fusible thermique, un déclencheur de gaz ou mousse, ou un mécanisme pyrotechnique thermo-activé.

Le câble thermique est un élément du fusible apte à fondre à une température donnée (par exemple entre 70°C et 100°C). La fonte du câble thermique permet de faire passer le fusible de la configuration intègre à la configuration ouverte.

Le déclencheur à gaz ou à mousse comprend une capsule métallique apte à fondre à une température donnée (par exemple entre 70°C et 100°C). La fonte de la capsule métallique libère un gaz ou un mécanisme de pression, ce qui permet de faire passer le fusible de la configuration intègre à la configuration ouverte.

Le fusible peut par ailleurs comprendre une goupille à rupture ou a crochet, une goupille magnétique ou une goupille à verrou. De manière générale, ce type de fusible est réutilisable.

La goupille à rupture ou à crochet comprend une boucle et un élément de tirage. Le support 11 peut être enfermé dans la boucle de la goupille. Lorsque l'élément de tirage est tiré, la boucle est ouverte ce qui libère le support 11.

La goupille magnétique comprend un premier électroaimant en vis-à-vis d'un second électroaimant ou d'un aimant permanent. Le premier électroaimant fournit un champ magnétique qui maintient ce dernier au contact du second aimant lorsque le premier électroaimant est alimenté électriquement. Le support 11 peut être attaché au second électroaimant. Lorsque le premier électroaimant est alimenté, le support 11 est fixé. Lorsque le premier électroaimant n'est pas alimenté, le support 11 est libre.

La goupille à verrou comprend un mécanisme de maintien et un bouton poussoir apte à libérer le mécanisme de maintien lorsqu'il est activé. Le support 11 peut être alors attaché au mécanisme de maintien.

A l'aide des moyens de couplage 30, lorsqu'un incendie se déclare dans le bâtiment sur lequel le dispositif de végétalisation est fixé, ce dernier peut être très rapidement abattu du bâtiment. En conséquence, cela diminue très fortement - voire annule - le risque de propagation de l'incendie au dispositif de végétalisation. De plus, l'accès au bâtiment peut être facilité pour les équipes d'intervention. Enfin, l'abattage de la végétalisation permet une meilleure évacuation des fumées et un meilleur accès des moyens d'extinction comme l'eau ou la mousse.

Dans d'autres modes de réalisation, le dispositif de végétalisation peut être amovible. Dans ce cas, le support 11 est un support amovible 12 et comprend un système de mise sous tension 14. Lorsque le dispositif de végétalisation comprend un système de mise sous tension, les moyens de couplage 30 peuvent être associés avec un ou plusieurs éléments du système de mise sous tension 14. En effet, si le système de mise sous tension 14 est en hauteur, il est nécessaire de pouvoir l'abattre et donc il doit être associé à un moyen de couplage 30. Inversement, si le système de mise sous tension 14 est au sol, associé à un moyen de renvoi 16 - voir ci-après - il n'est pas nécessaire de l'associer à un moyen de couplage 30.

Concernant le dispositif de végétalisation amovible, la seconde extrémité du support amovible 12 est engagée dans le système de mise sous tension 14 qui permet, dans une configuration bloquée, de maintenir le support amovible 12 en exerçant éventuellement une force de tension sur le support amovible 12, et qui permet dans une configuration coulissante, de laisse coulisser librement le support amovible 12. Ainsi, le support amovible 12 est assujetti au moyen d'ancrage 10 et au système de mise sous tension 14, mais le support amovible 12 peut être tendu ou au contraire relâché. En configuration tendue, le support amovible 12 est proche des façades du bâtiment. En configuration relâchée, le support amovible 12 peut être déplacé et éloigné des façades du bâtiment.

Le dispositif de végétalisation amovible constitue donc, par le support amovible 12, un support mécanique pour les plantes. Dans la configuration tendue, la plante est proche du bâtiment, et s'étend du moyen d'ancrage 10 vers le système de mise sous tension 14. Comme ce support mécanique peut être éloigné du bâtiment, la végétalisation est amovible. En effet, si le besoin s'en fait sentir, il est possible de relâcher la tension sur le support amovible 12 et de le faire coulisser dans le système de mise sous tension 14. La plante demeure enroulée sur le support amovible 12 - ou le palissage 18 - et va naturellement accompagner le support amovible 12 vers le sol - dans le cas d'une plante grimpante - donnant accès à la façade du bâtiment ou permettant l'entretien de la plante - taille, palissage, éclaircissage - en ayant les pieds sur terre - ou sur le bâtiment pour des pieds de plante placés sur des balcons ou des terrasses - au lieu de devoir utiliser un matériel lourd et couteux tel qu'une nacelle ou un échafaudage. Les risques d'endommagement de la plante sont aussi réduits. Dans le cas d'une plante tombante, le même principe est mis en œuvre, avec un point d'ancrage 10 placé en haut et le reste du dispositif placé en dessous : il est alors possible de relever la plante tombant pour l'éloigner du bâtiment. Après entretien de la plante ou intervention sur la façade, la plante est remise en place en restaurant la configuration tendue du support amovible 12.

Le système de mise sous tension 14 peut être réalisé par tous les dispositifs connus. Sont préférés des systèmes de mise sous tension 14 comprenant un système d'enroulement 141, tel qu'un enrouleur ou un treuil. En effet, un dispositif d'enroulement évite que la partie du support amovible 12 qui n'est pas sous tension dans la configuration tendue soit laissée au sol - ou sur le bâtiment - et puisse présenter des risques pour les utilisateurs.

Le système de mise sous tension 14 peut être commandé à distance, par exemple au moyen d'un dispositif de commande placé à proximité du moyen d'ancrage 10.

Dans un mode de réalisation, le dispositif de végétalisation comprend en outre un moyen de renvoi 16 destiné à être fixé sur le bâtiment et dans lequel le support amovible 12 est replié et peut coulisser librement. Ce mode de réalisation permet ainsi d'ajuster le chemin que la plante parcourra sur le bâtiment et de réaliser une végétalisation multidirectionnelle. Le moyen de renvoi 16 peut également être solidaire d'un moyen de couplage 30 comprenant un fusible tel que décrit précédemment.

De manière très avantageuse, le moyen de renvoi 16 est placé au sommet du bâtiment - ou au point le plus haut que doit atteindre la végétalisation - et le support amovible 12 coulissant dans le moyen de renvoi 16 est replié de telle sorte que le système de mise sous tension 14 peut être placé à proximité du moyen d'ancrage 10. Ainsi, le système qui permet d'éloigner la plante de la façade du bâtiment se trouve proche du pied de la plante. Les opérations de dépose temporaire de la végétalisation et d'entretien de la plante peuvent facilement être réalisées par une seule personne. Dans ce mode de réalisation avantageux, la plante s'enroule sur la partie du support amovible 12 comprise entre le moyen d'ancrage 10 et le moyen de renvoi 16 dans la configuration tendue. Le moyen de renvoi 16 est avantageusement choisi parmi les poulies, les anneaux, les barres ou les glissières.

Dans un mode de réalisation particulièrement avantageux pour les grandes hauteurs, le moyen de renvoi 16 est motorisé afin d'aider à la mise sous tension ou à la dépose du support amovible 12. Les poulies motorisées sont adaptées à cet usage.

Le dispositif de végétalisation amovible peut être mis en place dans toutes les orientations possibles compatibles avec la croissance des plantes envisagées. En particulier, le dispositif peut être multidirectionnel, en s'appuyant notamment sur un ou plusieurs moyens de renvoi 16. Notamment, le support amovible 12 peut être branché - ou ramifié. Dans ce cas, le support amovible 12 comprend un support principal sur lequel sont ajoutées des branches ou ramifications. Ce support amovible 12 est fixé au moyen d'ancrage 10 par un moyen de fixation sur une extrémité du support principal. Et ce support amovible 12 est mis sous tension par un ensemble de systèmes de mise sous tension 14, chacun opérant sur le support principal ou une branche.

. Par ailleurs, un dispositif de végétalisation amovible peut comprendre plusieurs supports amovibles 12, chacun étant ancré et mis sous tension indépendamment ou en coopération. Par exemple plusieurs supports amovibles 12 peuvent être fixés à un seul moyen d'ancrage 10 - par exemple une barre d'ancrage - et mis sous tension à l'aide d'un seul système de mise sous tension 14 - par exemple une barre porteuse. Un tel dispositif permet la végétalisation amovible d'une grande surface de bâtiment. Si les supports amovibles 12 sont sensiblement parallèles, la surface végétalisée est sensiblement rectangulaire. Dans un autre exemple, plusieurs supports amovibles 12 peuvent être fixés à un seul point d'ancrage et mis sous tension à l'aide d'une barre porteuse ne nécessitant qu'un système de mise sous tension 14. Ce dispositif conduit à une végétalisation en éventail.

Le présent exposé concerne par ailleurs un kit d'assemblage d'un dispositif selon de végétalisation selon l'un des aspects décrits ci-dessus, le kit comprenant une pluralité d'éléments à assembler entre eux incluant :
- au moins un moyen d'ancrage 10 destiné à être fixé sur un bâtiment ;
- au moins un support 11 comprenant à une première extrémité, un premier moyen de fixation destiné à être fixé au moyen d'ancrage 10 ;
- au moins un moyen de couplage destiné à coupler le support 11 au bâtiment :
   dans lequel le moyen de couplage comprend un fusible permettant de rompre le couplage entre le support 11 et le bâtiment.

Le support amovible 12 est un support linéaire autour duquel une plante grimpante peut s'enrouler partiellement ; ou alternativement le support amovible 12 comprend un palissage 18 sur lequel une plante grimpante peut s'enrouler partiellement.

Le support linéaire peut être choisi parmi un câble, une chaîne, une corde ou un fil. Le système de mise sous tension 14 peut aussi comprendre un système d'enroulement 141, de préférence choisis parmi les enrouleurs ou les treuils.

Le kit peut comprendre en outre au moins un moyen de renvoi 16 destiné à être fixé sur le bâtiment et dans lequel le support amovible 12 est replié et peut coulisser librement, ce moyen de renvoi pouvant être par exemple une poulie, un anneau, une barre, un axe ou une glissière.

La présente divulgation concerne aussi une méthode d'installation d'un dispositif de végétalisation d'un bâtiment. Cette méthode comprend les étapes suivantes :
- la fixation d'un moyen d'ancrage 10 sur le bâtiment ;
- la fixation d'un moyen de couplage 30 comprenant un fusible sur le bâtiment, le moyen de couplage 30 étant placé plus haut selon la direction de la gravité que le moyen d'ancrage 10 ;
- la fixation au moyen d'ancrage 10 d'un support 11, de préférence un support amovible 12, par sa première extrémité ;
- le couplage du support 11, de préférence un support amovible 12, au bâtiment par le moyen de couplage 30 ;
dans lequel :
- le support 11, de préférence un support amovible 12, est un support linéaire autour duquel une plante grimpante peut s'enrouler partiellement ; ou
- le support 11, de préférence un support amovible 12, comprend un palissage 18 sur lequel une plante grimpante peut s'enrouler partiellement.

Le support amovible 12 est un support linéaire autour duquel une plante grimpante peut s'enrouler partiellement ; ou alternativement le support amovible 12 comprend un palissage 18 sur lequel une plante grimpante peut s'enrouler partiellement.

Cette méthode peut être mise en œuvre sur un bâtiment achevé. Elle peut aussi être mise en œuvre lors de la construction du bâtiment, ce qui permet de concevoir des accès facilités aux systèmes de mises sous tension 14, et d'intégrer les différents éléments de manière esthétique.

La présente divulgation concerne enfin une méthode de dépose de la végétalisation d'un bâtiment. Cette végétalisation comprend une plante grimpante enroulée autour d'un support amovible 12 ou sur un palissage 18 assujetti à un support amovible 12. Le support amovible 12 est
- fixé à une première extrémité à un moyen d'ancrage 10 sur le bâtiment ;
- engagé dans un d'un système de mise sous tension 14 configuré pour
   ∘ maintenir le support amovible 12 en tension dans une configuration bloquée ; ou
   ∘ laisser coulisser librement le support amovible 12 dans une configuration coulissante.

La méthode comprend les étapes de
- relâcher la tension exercée sur le support amovible 12 par le système de mise sous tension 14 ; et
- faire coulisser le support amovible 12 afin que la plante grimpante soit éloignée du bâtiment.

En outre, la méthode de dépose de la végétalisation d'un bâtiment peut comprendre une ou plusieurs des étapes suivantes, dans des combinaisons techniquement compatibles :
- placer le système de mise sous tension 14 en configuration bloquée pour immobiliser le support amovible 12 en configuration relâchée;
- faire coulisser le support amovible 12 afin que la plante grimpante soit remise en place sur le bâtiment ;
- placer le système de mise sous tension 14 en configuration bloquée pour immobiliser le support amovible 12 en configuration tendue ;
- retirer ou entretenir une plante enroulée sur le support amovible 12 ;
- installer une plante en insérant au moins une branche ou une feuille entre un organe d'accrochage et le support amovible 12 .

Cette méthode présente de nombreux avantages. Elle permet de déposer temporairement un ensemble de végétalisation, pour l'entretien des végétaux ou pour l'entretien du bâtiment. De plus, cette méthode permet d'éviter l'utilisation d'engins lourds pour l'entretien. La méthode peut enfin être mise en œuvre par un seul opérateur.

### DESCRIPTION DES FIGURES

La figure 1 illustre un dispositif de végétalisation placé sur un bâtiment et comprenant des moyens de couplages.
La figure 2 est un schéma représentant un dispositif de végétalisation amovible illustrant la configuration tendue du dispositif amovible à gauche - végétalisation en place - et la configuration relâchée du dispositif amovible à droite - végétalisation temporairement déposée.
La figure 3 est un schéma représentant un bâtiment élevé sur lequel trois dispositifs de végétalisation amovibles selon différentes configurations sont installés, pour des plantes grimpantes.
La figure 4 est un schéma représentant un bâtiment élevé sur lequel un dispositif de végétalisation amovible multidirectionnel est installé.
La figure 5 est un schéma représentant une maison individuelle sur laquelle un dispositif de végétalisation amovible est installé.
La figure 6 est un schéma représentant un dispositif de végétation amovible disposé de sorte à ombrager une place de parking.

### MODES DE RÉALISATION ILLUSTRATIFS DE L'INVENTION

La figure 1 illustre un dispositif de végétalisation. Un bac de culture est installé au pied d'un bâtiment de grande hauteur. Deux chevilles sont prévues sur le bac de culture, depuis lesquelles s'étendent deux câbles. Chaque câble s'étend verticalement jusqu'à un moyen de couplage fixé au niveau du toit du bâtiment. Un palissage sous forme d'un filet textile s'étend entre les deux câbles. Une aristoloche (*Aristolochia*) pousse en s'enroulant sur le palissage. Les moyens de couplages comprennent des fusibles qui peuvent être activés simultanément, de sorte à faire tomber au sol le palissage, et l'aristoloche poussant sur le palissage.

Par conséquent, si un incendie se déclare dans le bâtiment, le dispositif de végétalisation peut être très rapidement abattu du bâtiment ce qui diminue très fortement - voire annule - le risque de propagation de l'incendie au dispositif de végétalisation.

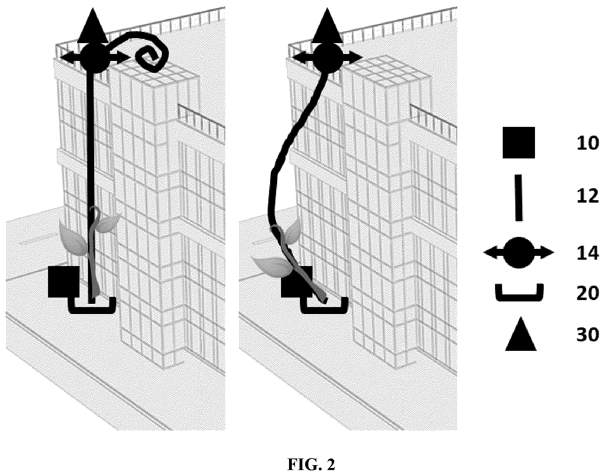

La figure 2 illustre le fonctionnement d'un dispositif de végétalisation amovible. Un bac de culture est installé au pied d'un bâtiment de grande hauteur. Une cheville est incluse dans le bac de culture. Sur cette cheville est fixé un support amovible sous forme de câble métallique de diamètre 3 mm. Sur le toit du bâtiment est installé un système de mise sous tension dans lequel le câble est engagé. Une ipomée (*Ipomoea*) pousse en s'enroulant sur le câble. Le système de mise sous tension est associé à un moyen de couplage et un fusible. Le fusible peut être activé, de sorte à faire tomber au sol le câble, et l'ipomée s'enroulant sur le câble.

A gauche de la figure 2, le câble est en configuration tendue : la câble est aligné sur la façade et la plante est proche de la façade.

Afin d'assurer l'entretien de la plante, le câble est détendu - à droite de la figure 2 - pour passer en configuration détendue. La plante, enroulée sur le câble est éloignée de la façade, approchée du sol, où un jardinier pourra réaliser l'entretien de la plante ou de la façade.

Ensuite, le câble reviendra en configuration tendue pour replacer la végétalisation.

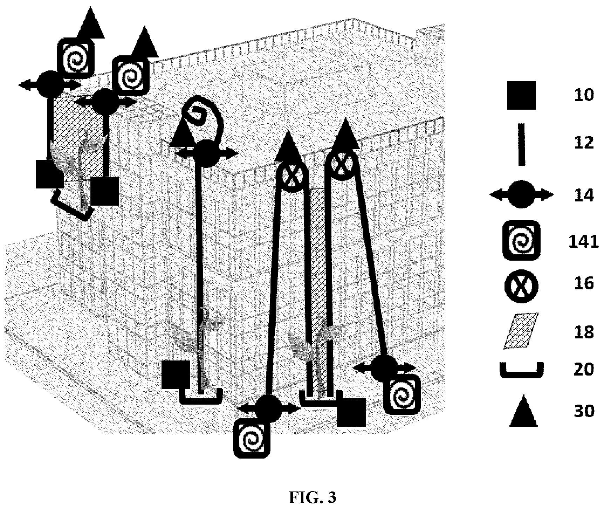

La figure 3 illustre différents dispositifs de végétalisation amovibles, pour des plantes grimpantes, sur un bâtiment de grande hauteur.

Le dispositif de la figure 2 est repris au centre du bâtiment.

A gauche du bâtiment, un dispositif comprenant un bac de culture sur lequel sont placées deux chevilles est positionné sur un balcon (librement accessible par un piéton). Sur chaque cheville est fixé un câble, chaque câble étant engagé dans un système de mise sous tension placé sur le toit du bâtiment. Les systèmes de mise sous tension sont équipés de treuils électriques commandés par une boîte électrique (non représentée) placée sur le bac de culture. Entre les deux câbles s'étend un palissage sous forme d'un filet textile présentant des mailles de taille moyenne 10 cm. Une aristoloche (*Aristolochia*) pousse en s'enroulant sur le palissage. La commande des deux treuils permet de détendre les câbles pour ramener le palissage et la plante vers le balcon, puis de tendre les câbles afin de replacer le palissage et la plante sur la façade. Les systèmes de mise sous tension sont associés chacun à un moyen de couplage et un fusible. Les fusibles peuvent être activé simultanément, de sorte à faire tomber au niveau du balcon le palissage, et l'aristoloche poussant sur le palissage.

A droite du bâtiment, un dispositif comprenant un bac de culture sur lequel sont placées deux chevilles est positionné au sol. Sur chaque cheville est fixé un câble, chaque câble étant engagé dans une poulie placée en haut du bâtiment qui renvoie le câble vers un système de mise sous tension placé au sol, à côté du bac de culture. Les systèmes de mise sous tension sont équipés de treuils électriques. Entre les deux câbles s'étend un palissage sous forme d'un filet textile présentant des mailles de taille moyenne 10 cm. Une akébie (*Akebia*) pousse en s'enroulant sur le palissage. La commande des deux treuils permet de détendre les câbles pour ramener le palissage et la plante au sol, puis de tendre les câbles afin de replacer le palissage et la plante sur la façade. Les moyens de renvoi comprennent chacun un fusible. Les fusibles peuvent être activés simultanément, de sorte à faire tomber au sol le palissage, et l'akébie poussant sur le palissage.

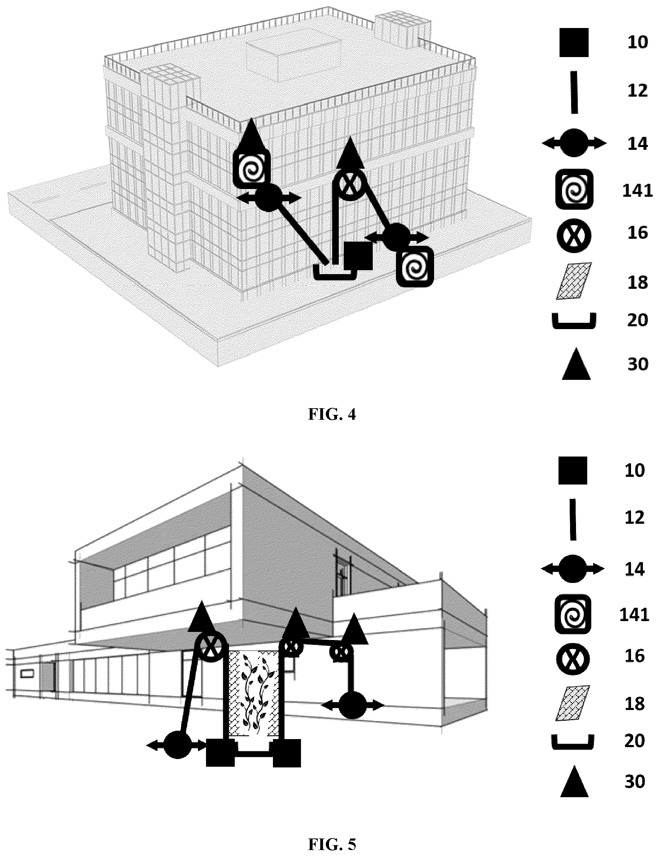

La figure 4 illustre un dispositif de végétalisation amovible multidirectionnel, sur un bâtiment de grande hauteur.

En façade avant, un dispositif comprenant un bac de culture sur lequel sont placées deux chevilles est positionné au sol. Sur chaque cheville est fixé un câble. L'un des câbles est étant engagé dans une poulie placée sur un balcon du bâtiment qui renvoie le câble vers un système de mise sous tension placé au sol, à côté du bac de culture. Le second câble est engagé dans un système de mise sous tension placé sur le balcon du bâtiment, en formant un angle de 30° avec la verticale. Les systèmes de mise sous tension sont équipés de treuils électriques, celui placé sur le balcon étant commandé à distance. Des vignes bleues de Chine (*Holboellia coriacea*, non représentées) poussent en s'enroulant sur les câbles. La commande des deux treuils permet de détendre les câbles pour ramener les plantes au sol, puis de tendre les câbles afin de replacer les plantes sur la façade. Le système de mise sous tension en hauteur et le moyen de renvoi sont associés chacun à un moyen de couplage et un fusible. Les fusibles peuvent être activés simultanément, de sorte à faire tomber au sol les câbles, et les vignes bleues de Chine poussant sur les câbles.

La figure 5 illustre un dispositif de végétalisation amovible sur une maison individuelle.

Un dispositif comprenant un bac de culture sur lequel sont placées deux chevilles est installé sous une avancée d'une maison individuelle. Sur chaque cheville est fixé un câble, chaque câble étant engagé dans une poulie - à gauche - ou deux poulies - à droite - placées sous l'avancée et qui renvoie le câble vers un système de mise sous tension placé au sol. Entre les deux câbles s'étend un palissage sous forme d'un filet textile présentant des mailles de taille moyenne 10 cm. Un kiwi (*Actinidia*) pousse en s'enroulant sur le palissage. La commande des deux treuils permet de détendre les câbles pour ramener le palissage et la plante jusqu'au sol, puis de tendre les câbles afin de replacer le palissage et la plante sous forme de cloison végétale. Les moyens de renvoi comprennent chacun un fusible. Les fusibles peuvent être activés simultanément, de sorte à faire tomber au sol le palissage, et le kiwi poussant sur le palissage.

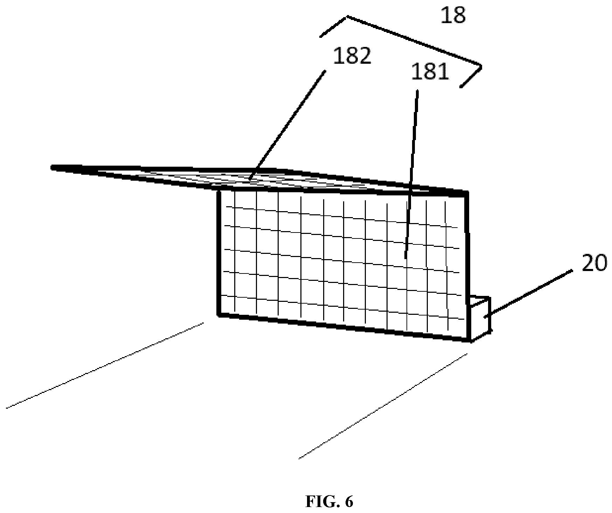

Dans d'autres modes de réalisation, illustrés par exemple sur la figure 6, le dispositif de végétation amovible est disposé dans un parking, de sorte à ombrager au moins une place pour un véhicule. Afin d'améliorer la lisibilité de la figure 6 seul le palissage 18 et le bac de culture 20 sont représentés. En d'autres termes, les moyens d'encrage 10, le support amovible 12, le système de mise sous tension 14, le moyen de renvoi 16 et le bâtiment sont omis sur la figure 6.

Dans certaines configurations, le palissage 18 peut comprendre au moins un angle. Par exemple, le palissage 18 peut comprendre une portion verticale 181 et une portion horizontale 182. Le bac de culture 20 peut alors être relié à la portion verticale du palissage 18, et la plante grimpante pousse depuis le bac de culture 20 sur la portion verticale 181 du palissage 18, puis sur la portion horizontale 182 du palissage 18. La portion horizontale 182 est alors configurée pour ombrager la place pour véhicule. Dans d'autres exemples, la plante grimpante peut pousser depuis la pleine terre.

### RÉFERENCES NUMÉRIQUES

10 - moyen d'ancrage // 12 - support amovible // 14 - système de mise sous tension // 141 - système d'enroulement // 16 - moyen de renvoi // 18 - palissage // 181 - portion verticale de palissage // 182 - portion horizontale de palissage // 20 - bac de culture // 30 - moyen de couplage

## Revendications

1. Dispositif de végétalisation d'un bâtiment comprenant :
- un moyen d'ancrage (10) destiné à être fixé sur le bâtiment ;
- un support (11) comprenant à une première extrémité, un premier moyen de fixation destiné à être fixé au moyen d'ancrage (10) ; et
- un moyen de couplage destiné à coupler le support (11) au bâtiment ;
**caractérisé en ce que** le moyen de couplage comprend un fusible permettant de rompre le couplage entre le support (11) et le bâtiment.

2. Dispositif selon la revendication **1,** dans lequel le fusible comprend une goupille à rupture ou à crochet, une goupille magnétique ou une goupille à verrou.

3. Dispositif selon l'une quelconque des revendications **1** ou **2** comprenant plusieurs moyens de couplage destinés à coupler le support (11) au bâtiment, **caractérisé en ce que** chaque moyen de couplage comprend un fusible et **caractérisé en ce que** tous les fusibles sont reliés à un unique moyen d'activation permettant de rompre conjointement tous les couplages entre le support (11) et le bâtiment.

4. Dispositif selon l'une quelconque des revendications **1** à **3,** dans lequel le support (11) est un support linéaire choisi parmi un câble, une chaîne, une corde, un filet ou un fil.

5. Dispositif selon l'une quelconque des revendications **1** à **4,** dans lequel le moyen d'ancrage (10) est solidaire d'un bac de culture (20) destiné à recevoir la plante grimpante.

6. Dispositif selon l'une quelconque des revendications **1** à **5,** dans lequel le support (11) est un support amovible (12), et comprenant en outre un système de mise sous tension (14) comprenant
▪ une configuration bloquée dans laquelle le système de mise sous tension (14) maintient le support amovible (12) en tension; et
▪ une configuration coulissante dans laquelle le système de mise sous tension (14) laisse coulisser librement le support amovible (12);
▪ le système de mise sous tension (14) étant apte à changer de configuration sous l'action d'un jardinier,
et **caractérisé en ce que**
- le support amovible (12) est un support linéaire autour duquel une plante grimpante peut s'enrouler partiellement ; ou
- le support amovible (12) comprend un palissage (18) sur lequel une plante grimpante peut s'enrouler partiellement.

7. Dispositif selon la revendication **6,** dans lequel le système de mise sous tension (14) comprend un système d'enroulement (141), de préférence choisis parmi les enrouleurs ou les treuils.

8. Dispositif selon l'une quelconque des revendications **6** ou **7** comprenant en outre un moyen de renvoi (16) destiné à être fixé sur le bâtiment et dans lequel le support amovible (12) est replié et peut coulisser librement, ledit moyen de renvoi (16) comprenant un fusible permettant de rompre le couplage entre le moyen de renvoi (16) et le bâtiment.

9. Dispositif selon la revendication **8,** dans lequel le moyen de renvoi (16) est choisi parmi une poulie, un anneau, une barre, un axe ou une glissière.

10. Dispositif selon l'une quelconque des revendications **6** à **9,** dans lequel le support amovible (12) est constitué d'un support principal et de branches, la première extrémité du support amovible (12) étant une première extrémité du support principal, un ensemble de systèmes de mise sous tension (14) étant configuré pour :
- maintenir le support principal et les branches en tension dans une configuration bloquée ; ou
- laisser coulisser librement le support principal et les branches dans une configuration coulissante.

11. Dispositif selon l'une quelconque des revendications **6** à **10,** dans lequel plusieurs supports amovibles (12) sont fixés à un moyen d'ancrage (10) ; et un système de mise sous tension (14) est configuré pour :
- maintenir tous les supports amovibles (12) en tension dans une configuration bloquée ; ou
- laisser coulisser librement tous les supports amovibles (12) dans une configuration coulissante.

12. Dispositif selon l'une quelconque des revendications **6** à **11,** dans lequel le système de mise sous tension (14) est commandé à distance, de préférence au moyen d'un dispositif de commande placé à proximité du moyen d'ancrage (10).

13. Kit d'assemblage d'un dispositif selon l'une quelconque des revendications **1** à **5,** le kit comprenant une pluralité d'éléments à assembler entre eux incluant :
- au moins un moyen d'ancrage (10) destiné à être fixé sur un bâtiment ;
- au moins un support (11) comprenant à une première extrémité, un premier moyen de fixation destiné à être fixé au moyen d'ancrage (10) ;
- au moins un moyen de couplage destiné à coupler le support (11) au bâtiment :
**caractérisé en ce que** le moyen de couplage comprend un fusible permettant de rompre le couplage entre le support (11) et le bâtiment.

14. Kit d'assemblage d'un dispositif selon l'une quelconque des revendications **6** à **12,** le kit comprenant une pluralité d'éléments à assembler entre eux incluant :
- au moins un moyen d'ancrage (10) destiné à être fixé sur un bâtiment ;
- au moins un support amovible (12) comprenant à une première extrémité, un premier moyen de fixation destiné à être fixé au moyen d'ancrage (10) ;
- au moins un système de mise sous tension (14) comprenant :
▪ une configuration bloquée dans laquelle le système de mise sous tension (14) maintient le support amovible (12) en tension; et
▪ une configuration coulissante dans laquelle le système de mise sous tension (14) laisse coulisser librement le support amovible (12);
▪ le système de mise sous tension (14) étant apte à changer de configuration sous l'action d'un jardinier ;
et **caractérisé en ce que**
- le support amovible (12) est un support linéaire autour duquel une plante grimpante peut s'enrouler partiellement ; ou
- le support amovible (12) comprend un palissage (18) sur lequel une plante grimpante peut s'enrouler partiellement.

15. Méthode d'installation d'un dispositif de végétalisation, de préférence amovible, d'un bâtiment comprenant les étapes suivantes :
- la fixation d'un moyen d'ancrage (10) sur le bâtiment ;
- la fixation d'un moyen de couplage (30) comprenant un fusible sur le bâtiment, le moyen de couplage (30) étant placé plus haut selon la direction de la gravité que le moyen d'ancrage (10),
- la fixation au moyen d'ancrage (10) d'un support (11), de préférence un support amovible (12), par sa première extrémité ;
- le couplage du support (11), de préférence un support amovible (12), au bâtiment par le moyen de couplage (30) ;
et **caractérisé en ce que**
- le support (11), de préférence un support amovible (12), est un support linéaire autour duquel une plante grimpante peut s'enrouler partiellement ; ou
- le support (11), de préférence un support amovible (12), comprend un palissage (18) sur lequel une plante grimpante peut s'enrouler partiellement.
